# EUROPEAN PATENT APPLICATION

(11) **EP 3 065 102 A1**
(43) Date of publication of application: **07.09.2016**
(21) Application number: 16158450.3
(22) Date of filing: 03.03.2016
(51) Int. Cl.: G06Q 30/00

(54) **SEARCH ENGINE OPTIMIZATION FOR CATEGORY WEB PAGES**

(30) Priority: 05.03.2015 US 201562128837 P; 01.03.2016 US 201615057599
(71) Applicant: Bazaarvoice, Inc., Austin, TX 78759 (US)
(72) Inventor: DEHAVEN, Michael, Cedar Park, TX, 78613 (US); JOHANNESSEN, Christian, Austin, TX, 78750 (US); ENDERS, Ann, Austin, TX, 78746 (US); SMOLEV, Max, Austin, TX, 78748 (US)
(74) Representative: Wegner, Hans

(57) **Abstract**

Techniques are disclosed relating to search engine optimizations (SEO) for web pages. In various embodiments, a computer system accesses a product database to retrieve product detail information for products that satisfy specified product eligibility requirements. The computer system randomly selects a subset of the products that satisfy the specified product eligibility requirements and accesses a user-generated content (UGC) database to retrieve UGC corresponding to the subset of products such that the retrieved UGC satisfies specified UGC eligibility requirements. The computer system randomly selects a subset of the retrieved UGC and inserts content into a web page to produce a modified web page. In such an embodiment, the inserted content includes product detail information for the subset of products, and the inserted content further includes the subset of the retrieved UGC.

## Description

This application claims the benefit of U.S. Prov. Appl. No. 62/128,837 filed on March 5, 2015, which is incorporated by reference herein in its entirety.

### BACKGROUND

### Technical Field

This disclosure relates to optimizing search engine results, and, more particularly, to optimizing results for web pages associated with particular categories of products or items.

### Description of the Related Art

A user wishing to conduct research on a particular type of product may go to a search engine, such as the one offered by Google™, and enter various terms relevant to the product. For example, a user wishing to purchase a pair of shoes might type in the terms "Men's Running Shoes." Based on these provided terms, the search engine may return various web-page results deemed to be relevant to these terms, such as a list of merchants selling the shoes.

The ordering in which results are presented is typically determined based on a ranking algorithm employed by the search engine. This algorithm may rank results based on any of various factors including, for example, the relevance of the page to the terms, the content within the page, how frequently the page has been selected when similar searches were performed, etc. Because higher ranking websites are likely to receive more web traffic, a company may modify its website in a manner that seeks to improve the ranking of its site as a whole or individual page.

### BRIEF DESCRIPTION OF THE DRAWINGS

FIG. 1 is a diagram illustrating an overview of one embodiment of a system in which the present disclosure may be implemented.
FIG. 2 is a diagram illustrating an example of a search engine that may be used to execute a search.
FIGS. 3-5 are exemplary screenshots of a website's home page, category page, and product page.
FIG. 6 is a diagram illustrating one embodiment of a search engine optimization (SEO) module.
FIG. 7 is a flow chart of one embodiment of a method for search engine optimization.
FIG. 8 is an exemplary screenshot of randomly selected content injected into a web page.
FIG. 9 is a flow chart of one embodiment of a method for updating category web page content.
FIG. 10 is a flow chart of one embodiment of a method for inserting content into a web page.
FIG. 11 is a flow chart of one embodiment of a method for modifying a category web page.
FIG. 12 is a flow chart of another embodiment of a method for modifying a category web page.
FIG. 13 is a diagram of one embodiment of an exemplary computer system.

This specification includes references to "one embodiment" or "an embodiment." The appearances of the phrases "in one embodiment" or "in an embodiment" do not necessarily refer to the same embodiment. Particular features, structures, or characteristics may be combined in any suitable manner consistent with this disclosure.

Terminology. The following paragraphs provide definitions and/or context for terms found in this disclosure (including the appended claims):

"Comprising." This term is open-ended. As used in the appended claims, this term does not foreclose additional structure or steps. Consider a claim that recites: "An apparatus comprising one or more processor units ...." Such a claim does not foreclose the apparatus from including additional components (e.g., a network interface unit, graphics circuitry, etc.).

"Configured to." Various units, circuits, or other components may be described or claimed as "configured to" perform a task or tasks. In such contexts, "configured to" is used to connote structure by indicating that the units/circuits/components include structure (e.g., circuitry) that performs those task or tasks during operation. As such, the unit/circuit/component can be said to be configured to perform the task even when the specified unit/circuit/component is not currently operational (e.g., is not on). The units/circuits/components used with the "configured to" language include hardware-for example, circuits, memory storing program instructions executable to implement the operation, etc. Reciting that a unit/circuit/component is "configured to" perform one or more tasks is expressly intended not to invoke 35 U.S.C. § 112, sixth paragraph, for that unit/circuit/component. Additionally, "configured to" can include generic structure (e.g., generic circuitry) that is manipulated by software and/or firmware (e.g., an FPGA or a general-purpose processor executing software) to operate in manner that is capable of performing the task(s) at issue.

Nominal labels. As used herein, terms such as "first," "second," etc., are used as labels for nouns that they precede, and, unless otherwise noted, do not imply any type of ordering (e.g., spatial, temporal, logical, etc.) for those nouns. For example, a "first" user generated content item and a "second" user generated content item can be used to refer to any two user generated content items; the first user generated content item is not necessarily generated prior to the second user generated content item.

As used herein, the term "based on" is used to describe one or more factors that affect a determination. This term does not foreclose the possibility that additional factors may affect a determination. That is, a determination may be solely based on specified factors or based on the specified factors as well as other, unspecified factors. Consider the phrase "determine A based on B." This phrase specifies that B is a factor is used to determine A or that affects the determination of A. This phrase does not foreclose that the determination of A may also be based on some other factor, such as C. This phrase is also intended to cover an embodiment in which A is determined based solely on B. As used herein, the phrase "based on" is thus synonymous with the phrase "based at least in part on."

### DETAILED DESCRIPTION

Some websites with a large number of web pages organize the content of the web pages into categories. For example, the website for Academy Sports + Outdoors™ may organize products into categories such as men's running shoes, golf equipment, fishing equipment, etc. (As used herein, a "product category" refers to a group of products that are classified as related in some way within a company's website.) To aid the user in navigating a website, a company may include pages that present an overview of a particular category and allow a user to access more specific pages within that category via hyperlinks embedded in the page. (As used herein, a "category web page" is a web page that includes links to a plurality of web pages that include detail information for items associated with a particular category.) For example, Academy's website may include a page entitled Men's running shoes, which includes links to specific product pages about particular models of shoes. (As used herein, a "product web page" refers to a web page that includes product detail information for a particular product. The phrase "product detail information" refers generally to any information regarding a product-e.g., price, size, color, and the like.)

Despite the utility of category web pages to users, this type of web page has traditionally fared poorly with respect to search engine page rankings. This problem may be attributable to the fact that these pages often include stale content with thin product description. For example, a category page for men's running shoes may not be updated as long as Academy's inventory of men's shoes remains the same; such a page may also include only a corresponding image and a product name (as opposed to any actual product description). Still further, these pages also show little evidence of user interaction as users are not, for example, posting reviews to such a page. As a result, existing category web pages may be under represented in search engine results.

The present disclosure describes embodiments in which various techniques may be used to improve the ranking of category web pages. As will be described below, a system may be employed that attempts to inject randomly-selected content into a category web page. In various embodiments, this injected content may include content about selected products and/or user generated content (UGC). (As used herein, the phrase "user-generated content (UGC)" refers to text, audio, video, or another information carrying medium that is generated by a user who may be a consumer of something (e.g., of goods, a product, a website, a service), a purchaser of that something, or may otherwise have an interest in that something.) In doing so, the system may improve the retrievability of the web page's content by causing the web page to obtain an improved ranking from a search engine by, for example, improving the amount of fresh content (i.e., new content) and providing evidence of user interaction. Furthermore, the system may allow a user to more efficiently and precisely find web page content desired by the user.

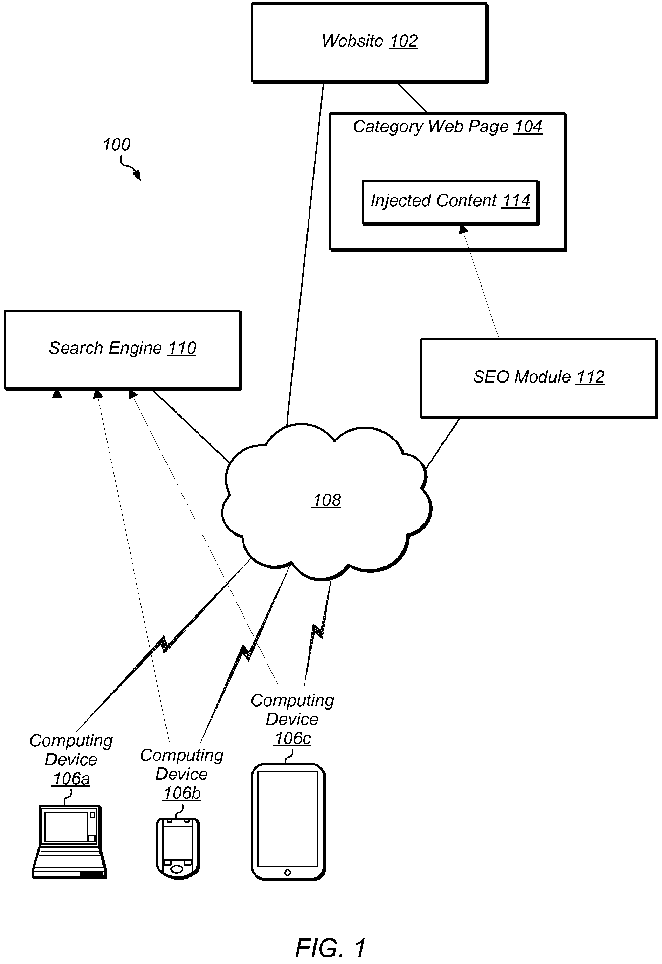

Turning now to Fig. 1, a block diagram of a computing system 100 used to implement various aspects of the present disclosure is shown. In the illustrated embodiment, system 100 includes a website 102 that is accessible to various computing devices 106a-c via a network 108. Devices 106 may be directed to website 102 via a search engine 110. As shown, system 100 may further include a search engine optimization (SEO) module 112, which, as discussed below, injects content 114 into category web page 104 within website 102.

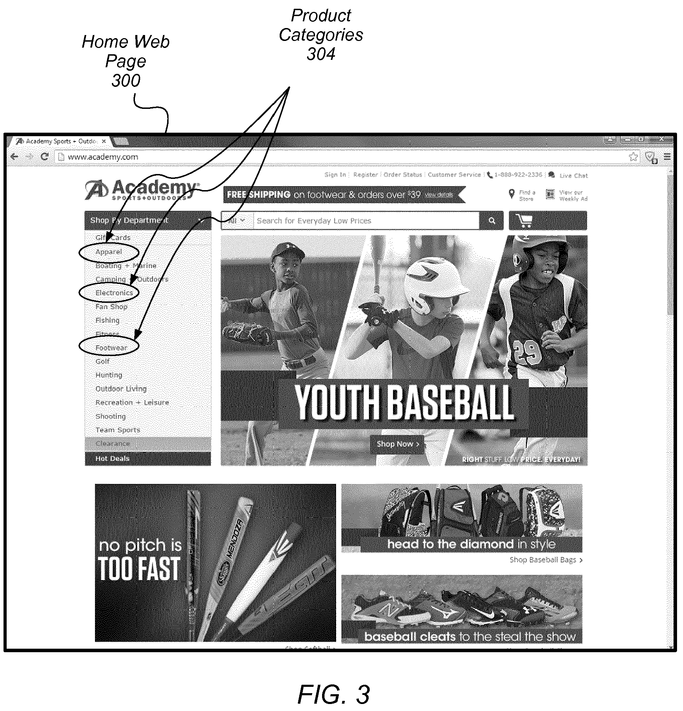

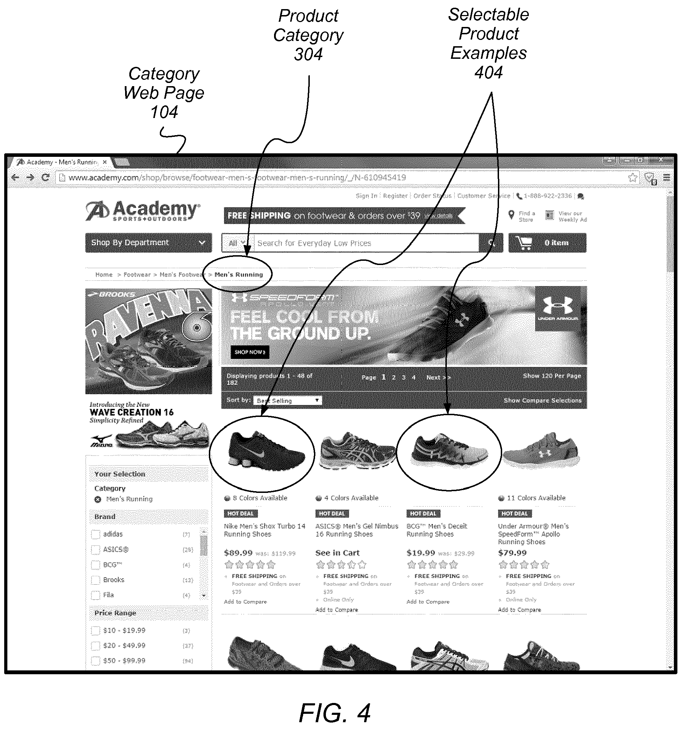

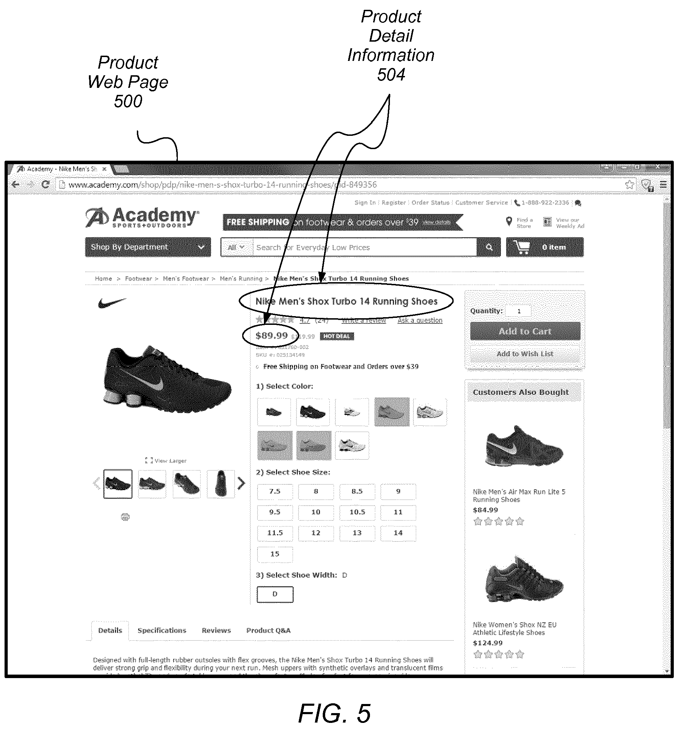

Website 102 may correspond to any suitable website accessible via a network, such as the Internet. In various embodiments, website 102 is a merchant website operated by a company that sells various products and/or services. Accordingly, website 102 may include an initial "home" web page, which presents an overview of the website along with examples of offered products and services as will be discussed with respect to Fig. 3. In the illustrated embodiment, website 102 further includes a category web page 104, which may present a particular category and provide examples of products associated with the category as will be discussed with respect to Fig. 4. Website 102 may also include "product" web pages, which discuss a particular product and may include UGC about the product as will be described below with respect to Fig. 5. For example, in some embodiments, UGC may include both quantitative (e.g., a product rating) and qualitative (e.g., a product review) assessments, comments, or questions, including user reviews, user stories, ratings, comments, problems, issues, questions, answers, opinions, or other types of content.

Computing devices 106, in one embodiment, execute a web browser to view content of website 102. As shown, devices 106 may correspond to any suitable form of computing device such as mobile devices (e.g., tablets, smartphones, personal digital assistants, or other mobile devices), laptops, desktops, or other types of computing systems. In various embodiments, a user of a computing device 106 may be attempting to access website 102 to learn about various products offered by website 102 as well as purchase those products. The user may also generate various forms of UGC for products on the website 102. As noted above, in some instances, a user of a device 106 may be directed to website 102 via search engine 110.

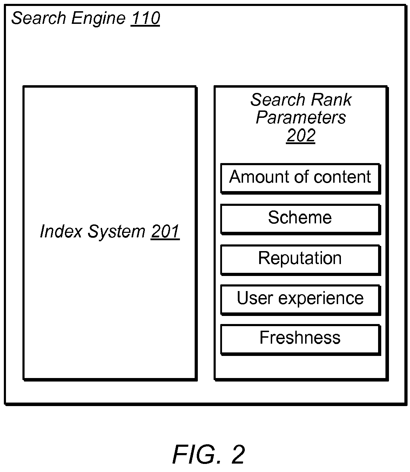

Search engine 110, in one embodiment, is an engine that is able to receive search requests and generate a corresponding set of results presentable via a web browser of devices 106. Search engine 110 may correspond to any suitable search engine such as those operated by Google™, Bing ™, Yahoo™, Ask.com™, and AOL™. Accordingly, in various embodiments, engine 110 may employ a web crawling engine that visits web pages and aggregates information from the pages in order to determine candidates for future search results. An index system of engine 110 may then use this information to rank web pages based on various ranking parameters as will be discussed below with respect to Fig. 2. Depending a page's ranking, engine 110 may present the page at a higher or lower location in its presented search results.

Search engine optimization (SEO) module 112, in one embodiment, is executable to modify content in a web page, such as category web page 104, in a manner that improves search engine 110's ranking of the page in order to potentially drive more page traffic to page 104. (As used herein, the term "page traffic" refers to the number of visits to a particular website.) In the illustrated embodiment, module 112 targets the ranking algorithm of search engine 110 through the injection of content 114. Injected content 114 may include any of various suitable content.

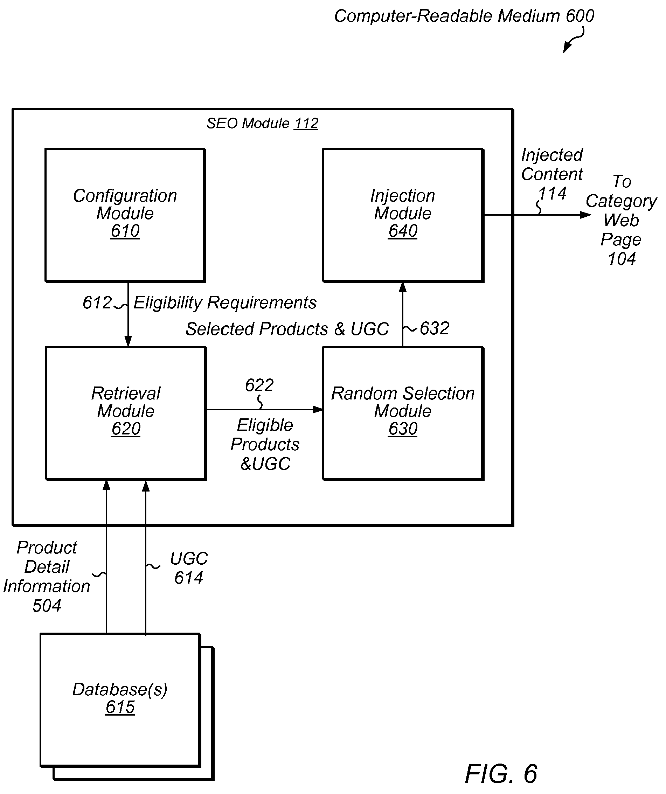

In one embodiment, module 112 randomly selects products within the particular category of page 104 and inserts content about those products as injected content 114. As used herein, the phrase "random selection" (or "randomly selecting") has its ordinary and accepted meaning in the art, and includes selecting elements in a manner that is truly random or employs a pseudorandom algorithm in making selections. For example, such a selection may use a pseudo random number generator (PRNG) (e.g., based on the Yarrow or Fortuna algorithms) in conjunction with modular arithmetic to select a set of elements. Accordingly, a selection merely based on some ranking (e.g., selecting the top five purchased products in a category) would not constitute a random selection. In some embodiments, module 112 may initially perform a non-random selection of products and then randomly select a subset of those products, however. For example, as will be described below with respect to Fig. 6, in some embodiments, module 112 selects an initial set of products based on some threshold criteria (e.g., products having a minimum rating of 4.2 stars out of 5 stars); module 112 then randomly selects a subset of these products (e.g., three random products out of fifty possible products with a rating of, at least, 4.2 stars). In such an embodiment, module 112 may then inject content 114 about these selected products into category web page 104.

In various embodiments, module 112 also randomly selects UGC associated with selected products and inserts the UGC as injected content 114. As with the selection of products, in some embodiments, module 112 may also perform an initial non-random selection of UGC and then randomly select a subset of the UGC. For example, as will be described below with respect to Fig. 6, in some embodiments, module 112 may select an initial set of user reviews for a selected product based on a set of minimum criteria (e.g., content quality, length of review, sentiment analysis, etc.); module 112 may then select some subset of these reviews (e.g., one review for each selected product).

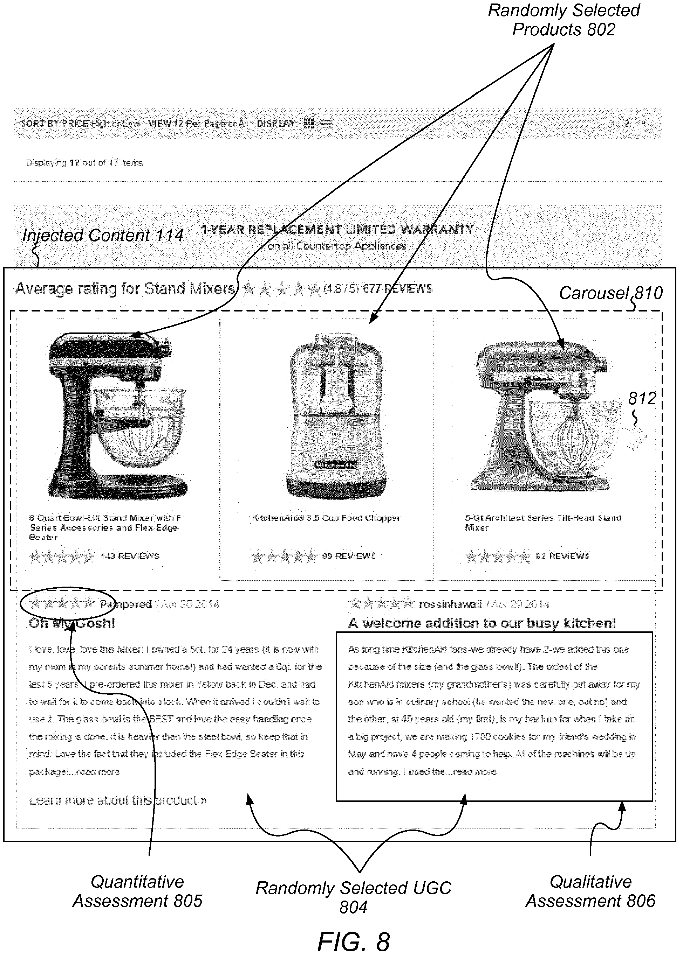

Once product content and/or UGC are selected, content 114 may be inserted and presented in any of various forms. In some embodiments, content 114 may include a graphical element that includes pictures of products, accompanying product detail information, and an accompanying review. Content 114 may also be selectable such that a user is directed to a particular product page upon selection of a portion of content 114-e.g., selecting an image of a product or name of the product. As will be described with respect to Fig. 8, in one embodiment, content 114 may include a carousel that depicts a selection of an initial set of items and corresponding UGC. A user may then select a side of the carousel to cycle through additional selected products in page 104's category.

As will be described next, injected content 114 may improve the ranking of category web page 104 by search engine 110 through increasing the value of one or more search rank parameters. As used herein, the phrase "search rank parameter" refers to a numeric value (e.g., a score) determined for a web page based on how well the page meets a criterion being assessed by a search engine.

Turning now to Fig. 2, a block diagram of search engine 110 is shown. In the illustrated embodiment, search engine 110 includes an index system 201 and search rank parameters 202. In such an embodiment, index system 201 is a component of a search engine that provides information about web pages to the search engine's servers for use in responding to search queries. In various embodiments, index system 201 may include, or operate in conjunction with, a web crawler engine-software executable to systematically visit and/or discover web pages on the Internet. Index system 201 may record data about visited web pages and analyze the data to determine various search rank parameters 202. These parameters may, in turn, be used by engine 110 to determine a ranking for a web page.

In the illustrated embodiment, search rank parameters 202 include the amount of content, the cleanliness and documentation of a page's scheme, the reputation of the page, the user experience on the page, and the freshness of the content. Search engine 210 may use these parameters together to determine page ranking such that an improvement in a parameter results in an improved page rank (e.g., a higher rank). An increase in the amount of content is an improvement of this search rank parameter. As a result, a web page that includes content from SEO module 112 may experience an improvement in its content search rank parameter because injected content 114 increases the overall content of the web page. Cleaner scheme (or mark-up) (e.g., accurate HTML title tag, well-structured data, simple site crawlability) may result in an improved rank as compared to a less organized scheme. As such, a web page that uses SEO module 112 may experience an improvement in the scheme search rank parameter because injected content 114 can add well-documented mark-up to the web page.

Similarly, web pages with better reputations (due to, for example, a high number of accurate links from high quality, relevant websites) are ranked more highly than ones with worse reputations. The reputation search rank parameter also implicates the social reputation of a web page. The reputation parameter reflects value placed on references from social accounts (e.g., FACEBOOK, TWITTER, INSTAGRAM) with good reputations. For example, if a user of a social networking service with a large number of social connections refers to a web page, that reference is positively reflected in the reputation search rank parameter. Shares on social accounts (such as when a FACEBOOK user shares a link to a web page) also factor in to a web page's social reputation. In some instances, a web page that uses SEO module 112 may experience an improvement in the reputation search rank parameter because the UGC included in injected content 114 can serve as a social trigger and acts to increase the web page's social reputation.

Web pages with fresher content may rank better than web pages with less fresh content. Generally, a fresher page (such as a page that was recently updated) tends to receive a better page rank. Merely updating a web page, however, may not guarantee such an improvement. Some search engines (e.g., GOOGLE) change the amount by which fresher content is weighted based on the content and context of the search query. For example, a search query for "hurricane" may result in a different result depending on whether or not there is an active hurricane: fresher content is weighted more heavily when there is an active hurricane, so recent news stories may be featured more prominently than historical accounts of past storms. For at least this reason, a web page that uses SEO module 112 may experience an improvement in the freshness search rank parameter because module 112 injects into the web page fresh content (e.g., injected content 114) that is relevant to the content and context of a wide range of search queries. In various embodiments, SEO module 112 may further periodically refresh injected content 114 with randomly selected replacement UGC, thus preventing injected content 114 from going "stale" and further improving the freshness search rank parameter.

Figs. 3-5 show examples of the various types of web pages as discussed above. Fig. 3 shows an example of a home web page 300, which corresponds to the highest level of a website. As shown, home web page 300 features a plurality of links to web pages associated with product categories 304. Fig. 4 shows an example of a category web page 104. As noted above, a website may feature any number of category web pages. In the example shown, category web page 104 is directed to a product category 304 (here, Men's Running Shoes) and features a number of particular products 404 that fall within product category 304. Fig. 5 shows an example of a product web page 500. Product web page 500 is direct to a particular product 404 within product category 304. Product web page 500 features various product detail information 504, including, for example, the product name, product rating, price, and purchase options (e.g., color, size). The product detail information 504 shown on page 500 is not exhaustive of all potential product detail information envisioned within the scope of the present disclosure.

Turning now to Fig. 6, a block diagram of computer-readable medium 600 that includes programs instructions for search engine optimization (SEO) module 112 is depicted. As discussed above, module 112 may be executable to inject content 114 into a category web page 104 in order to improve the page's ranking by search engine 110. In the illustrated embodiment, SEO module 112 includes a configuration module 610, retrieval module 620, random selection module 630, and injection module 640. In other embodiments, module 112 may be implemented differently than shown.

Configuration module 610, in one embodiment, is executable to receive and maintain configuration information usable by SEO module 112. In the illustrated embodiment, this information includes eligibility requirements 612, which are used to select an initial set of products and/or UGC by retrieval module 620. In various embodiments, eligibility requirements 612 may be specified by a user of SEO module 112 in order to permit greater configurability of module 112. In some embodiments, this user may be the entity that operates website 102, such as a company, a web administrator, etc. For example, a company wishing to sell particular types of products may specify requirements 612 to ensure that SEO module 112 selects only products meetings those requirements.

Eligibility requirements 612 may include various criteria for products and/or UGC. Accordingly, in one embodiment, eligibility requirements 612 may include a requirement for a minimum average rating (e.g., 4.2 stars out of 5 stars) before the product can be a candidate (i.e., eligible) for being included in injected content 114. In one embodiment, eligibility requirements 612 may include a requirement for a particular price point for products-e.g., that a candidate product cost at least (or at most) $50. In one embodiment, eligibility requirements 612 may include a requirement for a desired number of selected products-e.g., that three products be selected for inclusion in injected content 114. In one embodiment, eligibility requirements 612 may include a UGC requirement for a minimum rating (or maximum rating) before a given UGC can be candidate for inclusion in injected content 114—e.g., a user review awarding at least 4 stars for a product. In one embodiment, eligibility requirements 612 include a requirement for the presence (or absence) of particular keywords in a UGC in order to be selected-e.g., that the keywords "quiet," "comfortable," or "safe" be present in a review about a motorcycle helmet. Eligibility requirements 612 may also include UGC requirements for review quality (which may be assessed based on the presence of pictures or videos, the use of particularly descriptive terms, a UGC's rating as assessed by other website viewers, etc.), content length, sentiment analysis (i.e., whether the UGC presents a positive or negative review of a product and to what extent), etc.

Retrieval module 620, in one embodiment, is executable to identify eligible products and UGC 622 for inclusion in injected content 114 based on an analysis of retrieved product detail information 504 and UGC 614 in view of eligibility requirements 612. Accordingly, as discussed above with respect to Fig. 1, module 620 may perform a non-random selection of an initial set of eligible products and UGC, which undergo a second, random selection by random selection module 630 discussed below. Product detail information 504 and UGC 614 may be retrieved from any of various sources shown as database(s) 615. In some embodiments, these sources may include a product database 615 that includes product detail information 504 about products on website 102—and more specifically, products within the category of category web page 104. In one embodiment, this information 504 may be provided by an operator of website 102. In another embodiment, this information 504 may be obtained through a web crawler that operates on website 102. In some embodiments, sources may include a UGC database 615 that includes UGC about products on website 102. Similarly, UGC 614 may include UGC provided by an operator of a website, a web crawler, etc. In some embodiments, UGC 614 may also include UGC from not only website 102, but also UGC from one or more other websites-e.g., websites that offer the same (or similar) products being displayed on website 102.

Random selection module 630, in one embodiment, is executable to randomly select eligible products and UGC 622 for inclusion in injected content 114 as selected products and UGC 632. As noted above, this selection may be truly random or based on a pseudo-random algorithm. In some embodiments, module 630 may perform a first random selection for a set of products and a second random selection for UGC associated with those selected products. For example, module 630 may first randomly select three products out of fifty eligible products and then one or two UGC for each product out of multiple eligible UGC relating to each product. In order to ensure that category web page 104 includes fresh content, module 630 may perform these selections on a regular basis (i.e., periodically). For example, in some embodiments, module 630 may select products and UGC weekly, daily, hourly, or at some other interval. In some embodiments, module 630 may perform selections dynamically-i.e., each time a computing device 106 issues a hypertext transfer protocol (HTTP) request for category web page 104.

Injection module 640, in one embodiment, is executable to create content 114 for injection in category web page 104 based on randomly selected products and UGC 632. As will be described with respect to Fig. 8, this content may include product detail information such as product names, product descriptions, and/or product pictures. This content may also include UGC content such as reviews with quantitative assessments and/or qualitative assessments for selected products. (Although not depicted to simplify Fig. 6, in some embodiments, module 640 may also receive product detail information 504 and UGC 614 from databases 615 for selected products and UGC 632.) Content created by module 640 may be injected using any of various techniques. For example, in some embodiments, category web page 104 includes a link to injected content 114 so that a client device's web browser retrieves content 114 upon attempting rendering page 104. In such an embodiment, web page 104 and content 114 may be served from separate web servers operated by different entities-e.g., a server operated by the website owner and a server operated by a company that executes SEO module 112 as a service for the website owner. In other embodiments, a web server hosting website 102 dynamically inserts content 114 into page 104 (e.g., into the HTML file for page 104) in response to receiving an HTTP request for page 104. In such an embodiment, the web server may create content locally by executing module 640 or receive content 114 from an external source.

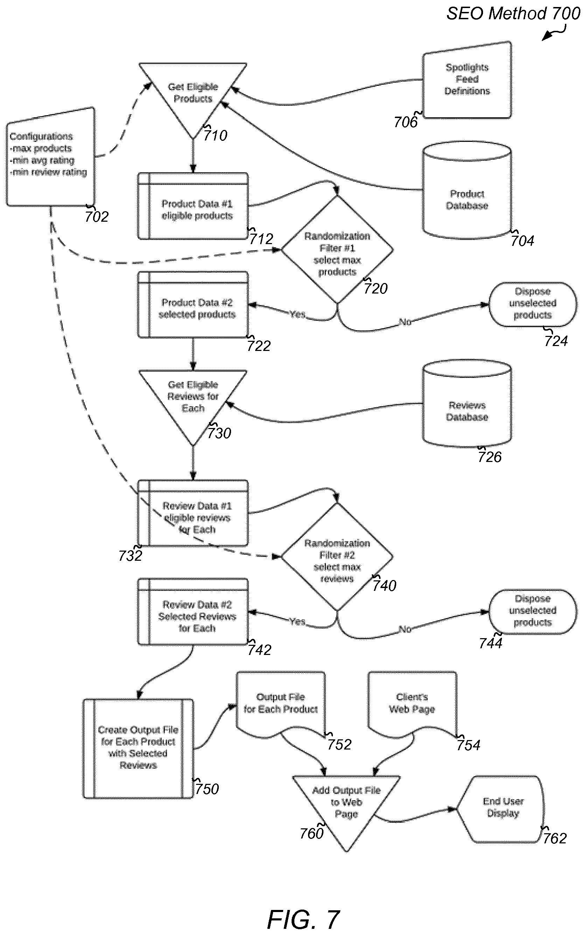

Turning now to Fig. 7, a flow diagram of a method 700 for optimizing the search engine results for a web page is shown. Method 700 is one embodiment of a method that may be performed by SEO module 112 in order to improve category web page 104's ranking.

At step 710, method 700 begins with the selection of eligible products based on configurations 702 (e.g., eligibility requirements 612), product detail information from product database 704, and feed definitions 706. Feed definitions 706 may be used to determine a pool of eligible products from a product database 704. For example, if the web page to be optimized is a category web page directed to "Men's Running Shoes," feed definitions 706 may result in particular products from product database 704 that fall within that product category being selected as an eligible product. The result of this selection process may result in a plurality of eligible products 712 that meet feed definitions 706 (e.g., that fall within the product category that the category web page is directed to).

In step 720, a number of those products are randomly selected from eligible products 712 to produce selected products 722. Those products that are not randomly selected may be disposed of.

In step 730, a plurality of reviews for each of the randomly selected products 722 may be retrieved from a reviews database 726 to produce selected reviews 742. The reviews database 726 and the product database 704 may be the same data storage unit, a separate storage unit, a networked storage unit, or any other related or unrelated data storage units (such as noted above for databases 615). Step 730 may include selecting reviews 742 based on eligibility requirements 612. For example, reviews below a minimum rating may be screened from reviews 732.

In step 740, a number of those reviews are randomly selected as reviews 742. Those reviews that are not randomly selected may be disposed of in step 744.

In step 750, an output file 752 is created that includes the selected products and the selected reviews for each selected product. In the illustrated embodiment, a respective file is created for each selected product; however, in other embodiments, a single output file for the pool of selected products and reviews may be created.

In step 760, the output file or files 752 may then be added to the web page 754 (e.g., to the category web page directed to "Men's Running Shoes"). This added (or injected) content may then be displayed to any end user visiting the web page.

Turning now to Fig. 8, an exemplary screenshot of injected content 114 is depicted. In the illustrated embodiment, content 114 may include multiple randomly selected products 802. In this instance, three different models of mixers are depicted on a category web page directed to the category of stand mixers. As shown, content 114 also includes randomly selected UGC 804 about the selected mixers. In this instance, the reviewer named Pampered awarded a quantitative assessment 805 of 5 stars for one of the mixers depicted above. Another reviewer, rossinhawaii, presented a qualitative assessment 806 describing how the reviewer enjoys his mixer so much he has two mixers.

In the illustrated embodiment, content 114 further includes products within a graphical element called a carousel 810. Accordingly, if a user wants to view additional randomly selected products 802, the user may select arrow 812 to cycle through additional products 802. In the illustrated embodiment, a user can also select the pictures of products 802 to control what UGC 804 is presented. As shown, the user has selected the black mixer depicted on the left, and the presented UGC corresponds to the black mixer. The user may also select the link "learn more about this product" to be directed to a product page for that product, such as product page 500 shown in Fig. 5. A user may also select "read more" for a particular UGC 804 to see the entirety of that UGC 804. In a further embodiment, UGC 804 may be presented for the first of randomly selected products 802 without any selection from a user.

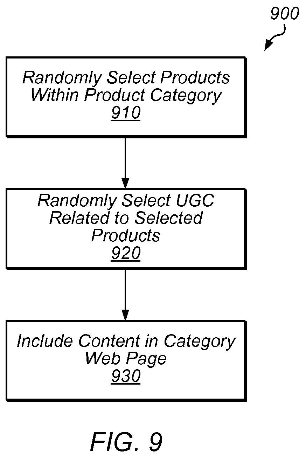

Turning now to Fig. 9, a flow diagram of a method 900 is depicted. Method 900 is one embodiment of method for updating content of a category web page (e.g., category web page 104). In some embodiments, method 900 may be performed by a computer system such as a server hosting a website or a computer system providing content to a server hosting a website. In some instances, performance of method 900 may improve the ranking of the category web page.

Method 900 begins at step 910 with one or more products being randomly selected from multiple products within the product category of the web page. In step 920, user-generated content (UGC) is randomly selected relating to the randomly selected one or more products. In step 930, additional content is included in the category web page to produce an updated category web page. In such an embodiment, the additional content includes product detail information for the randomly selected one or more products, and the additional content further includes the randomly selected UGC. In various embodiments, the updating performed by method 900 is performed such that, when displayed, the updated category web page includes a graphical element that is selectable by a user to access the product detail information and UGC within the additional content. In some embodiments, the graphical element is a carousel user interface element (e.g., carousel 810) selectable to view product detail information and UGC for each of the one or more randomly selected products.

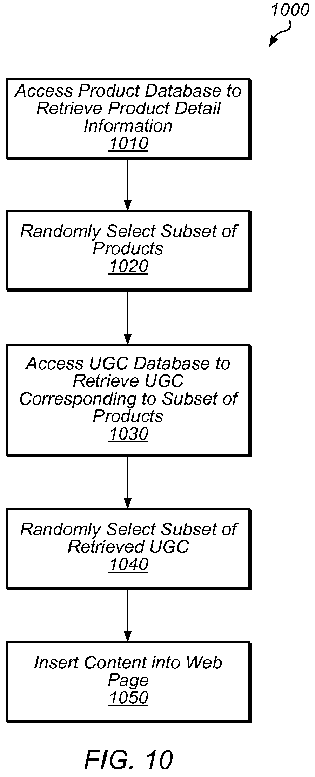

Turning now to Fig. 10, a flow diagram for a method 1000 is depicted. Method 1000 is one embodiment of a method for inserting content into a web page. In some embodiments, method 1100 is performed by a computing system (e.g., executing SEO module 112) such as a web server serving the web page or another computing system operating in conjunction with the web server. Method 1000 begins in step 1010 with a computer system accessing a product database to retrieve product detail information for products that satisfy specified product eligibility requirements. In step 1020, method 1000 includes the computer system randomly selecting a subset of the products that satisfy the specified product eligibility requirements. In step 1030, the computer system accesses a user-generated content (UGC) database to retrieve UGC corresponding to the subset of products, where the retrieved UGC satisfies specified UGC eligibility requirements. In step 1040, the computer system randomly selects a subset of the retrieved UGC. In step 1050, the computer system inserts content into a web page to produce a modified web page, where the inserted content includes product detail information for the subset of products and further includes the subset of the retrieved UGC.

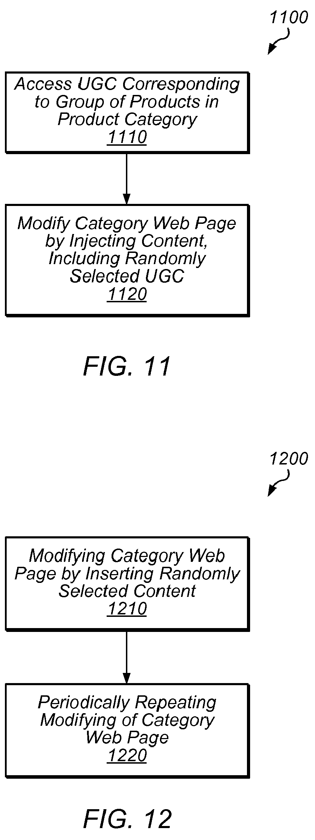

Turning now to Fig. 11, a flow diagram for a method 1100 is depicted. Method 1100 is one embodiment of a method for modifying a category web page. In some embodiments, method 1100 is performed by program instructions (e.g., SEO module 112) executing on a computing system such as a web server serving the web page or another computing system operating in conjunction with the web server. Method 1100 begins at step 1110 with a computer system accessing user-generated content (UGC) corresponding to a group of products identified in a category web page for a particular product category. In step 1120, method 1100 includes the computer system modifying the category web page by injecting content into the category web page, the injected content including randomly selected UGC for various ones of the group of products. In such an embodiment, the modifying is performed such that a displayed version of the modified category web page includes a graphical element that is selectable to view the randomly selected UGC.

Turning now to Fig. 12, a flow diagram for a method 1200 is depicted. Method 1200 is another embodiment of a method for modifying a category web page such as category web page 104. In some embodiments, method 1200 is performed by a search engine optimization module (e.g., SEO module 112) executing on a computing system such as a web server serving the web page or another computing system operating in conjunction with the web server. Method 1200 begins in step 1210 with the search engine optimization module modifying a category web page that includes links to a plurality of product web pages for products within a particular product category. The modifying includes inserting randomly-selected content into the category web page such that the randomly-selected content is directed to products identified by the category web page. In such an embodiment, the modified category web page is renderable by a browser application to display a graphical element that is selectable to view the randomly-selected content. In step 1220, method 1200 further includes the search engine optimization module periodically repeating the modifying of the category web page.

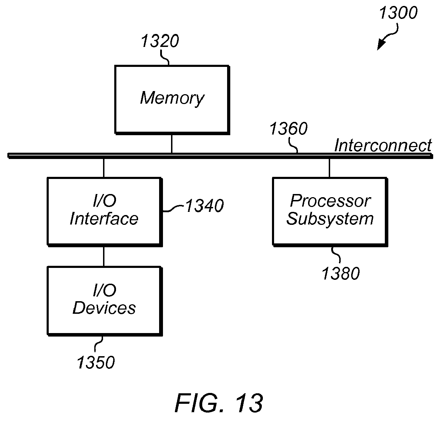

Turning now to Fig. 13, a block diagram of an exemplary computer system 1300, which may implement a computing device 106, a computing device executing SEO module 112, and/or a computing server hosting website 102, is depicted. Computer system 1300 includes a processor subsystem 1380 that is coupled to a system memory 1320 and I/O interfaces(s) 1340 via an interconnect 1360 (e.g., a system bus). I/O interface(s) 1340 is coupled to one or more I/O devices 1350. Computer system 1300 may be any of various types of devices, including, but not limited to, a server system, personal computer system, desktop computer, laptop or notebook computer, mainframe computer system, tablet computer, handheld computer, workstation, network computer, a consumer device such as a mobile phone, music player, or personal data assistant (PDA). Although a single computer system 1300 is shown in Figure 13 for convenience, system 1300 may also be implemented as two or more computer systems operating together.

Processor subsystem 1380 may include one or more processors or processing units. In various embodiments of computer system 1300, multiple instances of processor subsystem 1380 may be coupled to interconnect 1360. In various embodiments, processor subsystem 1380 (or each processor unit within 1380) may contain a cache or other form of on-board memory.

System memory 1320 is usable store program instructions executable by processor subsystem 1380 to cause system 1300 to perform various operations described herein. System memory 1320 may be implemented using different physical memory media, such as hard disk storage, floppy disk storage, removable disk storage, flash memory, random access memory (RAM-SRAM, EDO RAM, SDRAM, DDR SDRAM, RAMBUS RAM, etc.), read only memory (PROM, EEPROM, etc.), and so on. Memory in computer system 1300 is not limited to primary storage such as memory 1320. Rather, computer system 1300 may also include other forms of storage such as cache memory in processor subsystem 1380 and secondary storage on I/O Devices 1350 (e.g., a hard drive, storage array, etc.). In some embodiments, these other forms of storage may also store program instructions executable by processor subsystem 1380. In some embodiments, SEO module 112 described above may be included within system memory 1320.

I/O interfaces 1340 may be any of various types of interfaces configured to couple to and communicate with other devices, according to various embodiments. In one embodiment, I/O interface 1340 is a bridge chip (e.g., Southbridge) from a front-side to one or more back-side buses. I/O interfaces 1340 may be coupled to one or more I/O devices 1350 via one or more corresponding buses or other interfaces. Examples of I/O devices 1350 include storage devices (hard drive, optical drive, removable flash drive, storage array, SAN, or their associated controller), network interface devices (e.g., to a local or wide-area network), or other devices (e.g., graphics, user interface devices, etc.). In one embodiment, computer system 1300 is coupled to a network via a network interface device 1350 (e.g., configured to communicate over WiFi, Bluetooth, Ethernet, etc.).

Various embodiments of systems and methods for optimizing search engine results are contemplated based on the preceding description, including, but not limited to, the embodiments listed below.
A method, comprising:
modifying, by a search engine optimization module executing on a computer system, a category web page that includes links to a plurality of product web pages for products within a particular product category, wherein the modifying includes inserting randomly-selected content into the category web page, wherein the randomly-selected content is directed to products identified by the category web page, and wherein the modified category web page is renderable by a browser application to display a graphical element that is selectable to view the randomly-selected content; and
periodically repeating, by the search engine optimization module, the modifying of the category web page.
   2. The method of embodiment 1, wherein the periodically repeating is performed at least daily.
   3. The method of embodiment 1, wherein the randomly-selected content includes user-generated content that specifies one or more quantified assessments of products within the particular product category.
   4. The method of embodiment 1, wherein the search engine optimization module is executable to increase page traffic for the category web page via one or more particular search engines, and wherein the periodically repeating increases a search rank of the category web page for at least one of the one or more particular search engines by increasing a freshness parameter for the category web page.

Although specific embodiments have been described above, these embodiments are not intended to limit the scope of the present disclosure, even where only a single embodiment is described with respect to a particular feature. Examples of features provided in the disclosure are intended to be illustrative rather than restrictive unless stated otherwise. The above description is intended to cover such alternatives, modifications, and equivalents as would be apparent to a person skilled in the art having the benefit of this disclosure.

The scope of the present disclosure includes any feature or combination of features disclosed herein (either explicitly or implicitly), or any generalization thereof, whether or not it mitigates any or all of the problems addressed herein. Accordingly, new claims may be formulated during prosecution of this application (or an application claiming priority thereto) to any such combination of features. In particular, with reference to the appended claims, features from dependent claims may be combined with those of the independent claims and features from respective independent claims may be combined in any appropriate manner and not merely in the specific combinations enumerated in the appended claims.

## Claims

1. A non-transitory computer-readable medium having stored thereon instructions executable by a computer system to cause the computer system to perform operations comprising:
updating content of a category web page that includes information regarding a plurality of products within a particular product category, wherein the updating includes:
randomly selecting one or more products from the plurality of products;
randomly selecting user-generated content (UGC) relating to the randomly selected one or more products; and
including additional content in the category web page to produce an updated category web page, wherein the additional content includes product detail information for the randomly selected one or more products, and wherein the additional content further includes the randomly selected UGC; and
wherein the updating is performed such that, when displayed, the updated category web page includes a graphical element that is selectable by a user to access the product detail information and UGC within the additional content.

2. The computer-readable medium of claim 1, wherein the category web page includes links to product web pages for the plurality of products, and wherein the graphical element is a carousel user interface element selectable to view product detail information and UGC for each of the one or more randomly selected products.

3. The computer-readable medium of claim 1, wherein the category web page is accessible to an index system of a search engine, and wherein the updating increases a value of at least one search rank parameter used by the index system of the search engine.

4. The computer-readable medium of claim 3, wherein the at least one search rank parameter includes a freshness parameter and a social triggers parameter.

5. The computer-readable medium of claim 1, wherein the product detail information in the additional content includes one or more images, and wherein the UGC in the additional content includes product reviews.

6. The computer-readable medium of claim 1, wherein the randomly selecting one or more products includes selecting up to a maximum number of products, wherein the maximum number is user-specified.

7. The computer-readable medium of claim 1, wherein the randomly selecting UGC is performed according to user-specified UGC eligibility requirements.

8. The computer-readable medium of claim 7, wherein the UGC eligibility requirements include a minimum product rating value that limits the randomly selected UGC to those UGC items having a product rating values that meets or exceeds the minimum product rating value.

9. The computer-readable medium of claim 7, wherein the UGC eligibility requirements include a keyword requirement that limits the randomly selected UGC to those UGC having one or more user-specified keywords.

10. A method, comprising:
accessing, by a computer system, a product database to retrieve product detail information for products that satisfy specified product eligibility requirements;
randomly selecting, by the computer system, a subset of the products that satisfy the specified product eligibility requirements;
accessing a user-generated content (UGC) database to retrieve UGC corresponding to the subset of products, wherein the retrieved UGC satisfies specified UGC eligibility requirements;
randomly selecting a subset of the retrieved UGC; and
inserting content into a web page to produce a modified web page, wherein the inserted content includes product detail information for the subset of products, and wherein the inserted content further includes the subset of the retrieved UGC.

11. The method of claim 10, wherein the web page is a category web page.

12. The method of claim 11, wherein the category web page is a web page within a website of an entity, and wherein the specified product eligibility requirements and specified UGC eligibility requirements are entity-specified parameters to a search engine optimization module executable to improve a search rank of one or more pages within the entity's website on a particular search engine.

13. The method of claim 10, wherein the specified product eligibility requirements specify a maximum amount of time a product has been available for sale, and wherein the specified UGC eligibility requirements specify a minimum product rating value.
